# EUROPÄISCHE PATENTSCHRIFT

(11) **EP 1 772 943 B1**
(45) Veröffentlichungstag und Bekanntmachung des Hinweises auf die Patenterteilung: **29.10.2014**
(21) Anmeldenummer: 06121392.2
(22) Anmeldetag: 28.09.2006
(51) Int. Cl.: H01M 10/48, G01R 31/36, H02J 7/00, H01M 2/10, H01M 10/42

(54) **Akkupack mit Ladezustandsanzeige**
Battery pack with state of charge indicator
Paquet de batterie indicateur d'état de charge

(30) Priorität: 10.10.2005 DE 102005000135
(43) Veröffentlichungstag der Anmeldung: 11.04.2007
(73) Patentinhaber: HILTI Aktiengesellschaft, 9494 Schaan (LI)
(72) Erfinder: Ziegler, Bernd, 86856, Hiltenfingen (DE); Thanner, Thomas, 81243 München (DE)
(74) Vertreter: Hilti Aktiengesellschaft Corporate Intellectual Property

(56) Entgegenhaltungen:
- EP-A1- 1 450 174
- DE-A1- 19 911 590
- DE-U1- 29 724 016
- US-A- 4 861 685

## Beschreibung

Die Erfindung betrifft einen Akkupack für ein Handwerkzeuggerät, wie beispielsweise eines akkubetriebenen Schraub-, Bohr- oder -Holzbearbeitungsgerätes. Der Akkupack weist ein Gehäuse auf, in dem mehrere Akkuzellen untergebracht sind und an dem von Aussen zugängliche und mit den Akkuzellen elektrisch verbundene Kupplungsmittel vorgesehen sind. Ferner ist eine Ladezustandsanzeige vorgesehen, die über von Aussen zugängliche Aussenschaltmittel aktivierbar ist und den Ladezustand der Akkuzellen angibt.

Bei derartigen Akkupacks kann der Ladezustand durch Betätigung der Aussenschaltmittel jederzeit überprüft werden, beispielsweise um ihn zu einem geeigneten Zeitpunkt wieder aufladen zu können.

Aus DE 295 15 860 U1 ist ein Akkupack mit integrierter Ladezustandsanzeige bekannt. Diese ist durch einen Druckknopf aktivierbar, der aus einer Gehäuseseite des Akkupacks herausragt.

Durch die Verwendung eines Druckknopfes zur bedarfsweisen Aktivierung der Ladezustandsanzeige wird hierbei eine zusätzliche Entladung der Akkuzellen durch die Ladezustandsanzeige während längerer Standzeiten vermieden.

Nachteilig an dem bekannten Akkupack ist jedoch, dass der Druckknopf, insbesondere dadurch dass er das Gehäuse durchragt, die Herstellungskosten erhöht und zu Dichtigkeitsproblemen führt. Zudem besteht bei vielen Verwendungsarten eines solchen Akkupacks die Gefahr, dass der von der Oberfläche des Gehäuses abstehende Druckknopf abgebrochen wird. Ferner kommt es bei der Verwendung einer solchen bedarfsweise aktivierbaren Ladezustandsanzeige häufig vor, dass es die bedienende Person vergisst von Zeit zu Zeit den Ladezustand zu überprüfen. Dadurch kann ein guter Zeitpunkt zum Aufladen des Akkupacks verpasst werden, was wiederum zur Folge haben kann, dass die bedienende Person einen bestimmten Arbeitsablauf zu einem ungünstigen Zeitpunkt unterbrechen muss.

Aus DE 42 04 420 A1 ist ein akkumulatorbetriebenes Elektrowerkzeug bekannt an dessen Akkupack eine aufsteckbare Ladezustandsanzeige vorgesehen ist. Diese weist eine LCD-Anzeige, die permanent den Ladezustand anzeigt, sowie zwei Leuchtdioden auf, von denen bei Betätigung des Elektrowerkzeuges jeweils eine aufleuchtet um anzuzeigen, ob der Ladezustand für die aktuellen Geräteeinstellungen ausreicht oder zu gering ist.

Nachteilig an diesem Akkupack ist, dass einerseits die LCD-Anzeige zu einer permanenten zusätzlichen Entladung führt, die sich insbesondere bei längeren Standzeiten bemerkbar macht. Andererseits sind die Leuchtdioden lediglich in Verbindung mit dem Elektrowerkzeug aktivierbar.

Der vorliegenden Erfindung liegt die Aufgabe zugrunde, bei einem Akkupack die genannten Nachteile zu vermeiden und bei Vermeidung einer unnötigen Entladung eine wiederkehrende Einsichtnahme der Ladezustandsanzeige zu gewährleisten.

Erfindungsgemäss wird die Aufgabe dadurch gelöst, dass die Aussenschaltmittel durch Betätigungsmittel einer Verriegelungsmechanik des Akkupacks gebildet sind. Hierdurch kann einerseits der Ladezustand bedarfsweise angezeigt werden, wodurch eine permanente Entladung entfällt. Andererseits wird regelmässig mit Betätigung der Verriegelungsvorrichtung zum Lösen derselben von einem Werkzeuggerät auch gleichzeitig der Ladezustand angezeigt. Hierdurch wird die bedienende Person regelmässig automatisch auf den jeweiligen Ladezustand aufmerksam gemacht. Ferner wird durch die Integrierung der Schaltmittel der Ladezustandsanzeige in die Betätigungsmittel der Verriegelungsmechanik ein zusätzlicher Durchbruch am Gehäuse und ein zusätzliches Schaltmittel vermieden, was die Herstellungskosten vermindert.

In einer besonders bevorzugten Ausführungsform ist die Ladezustandsanzeige mit einer Messelektronik verbunden, die über im Innern des Gehäuses angeordnete Innenschaltmittel aktivierbar ist, die mit den Betätigungsmitteln mechanisch gekoppelt sind. Auf diese Weise können die Messelektronik und die zugehörigen Schaltmittel als vormontierbare Baugruppe ausgeführt werden, was die Montage des Akkupacks vereinfacht.

Vorteilhafterweise erfolgt die mechanische Koppelung über ein Druckglied, das mit einem Verriegelungselement der Verriegelungsmechanik fest verbunden ist. Hierdurch lassen sich die Betätigungsmittel auf besonders kostengünstige Weise derart modifizieren, dass sie neben der Betätigung der Verriegelungsmechanik gleichzeitig auch zur Betätigung der Schaltmittel der Messelektronik verwendet werden können.

Bevorzugterweise umfassen die Betätigungsmittel zwei an gegenüberliegenden Seiten des Akkupacks angeordnete Druckknöpfe, über die die Messelektronik jeweils aktivierbar ist. Hierdurch kann die Messelektronik von der einen oder der anderen Seite des Akkupacks aktiviert werden. Zudem ist es auf diese Weise möglich durch Betätigung eines einzigen Druckknopfes die Messelektronik zu aktivieren ohne, dass gleichzeitig die Verriegelungsmechanik gelöst wird.

Alternativ hierzu ist die Messelektronik nur durch gleichzeitigen Druck auf beide Druckknöpfe betätigbar. Hierdurch kann ein versehentliches Einschalten der Ladezustandsanzeige vermieden werden.

Besonders vorteilhaft ist es, wenn die Messelektronik einen Timer aufweist, über den die Ladezustandsanzeige ab Aktivierung nach Ablauf einer vorbestimmten Zeitdauer, wie beispielsweise 3 Sekunden, wieder deaktivierbar ist. Ein solcher Timer kann dabei als eigener integrierter Schaltkreis oder als Timerfunktion einer Software umgesetzt sein. In jedem Fall wird hierdurch verhindert, dass die Ladezustandsanzeige durch ein versehentliches dauerhaftes Drücken eines der Druckknöpfe, beziehungsweise beider Druckknöpfe, beispielsweise bei Aufbewahrung in einem Werkzeugkoffer, dauerhaft aktiviert ist und dadurch eine schnellere Entladung bewirkt.

Ferner ist es günstig, wenn die Ladezustandsanzeige mehrere Leuchtdioden aufweist, die bei aktivierter Messelektronik in Abhängigkeit vom gemessenen Ladezustand in unterschiedlicher Anzahl aktiviert sind. Hierdurch erhält man eine besonders langlebige und kostengünstige Ladezustandsanzeige.

Die Erfindung wird nachstehend anhand eines Ausführungsbeispieles näher erläutert. Es zeigen:
- Fig. 1: eine perspektivische Ansicht eines erfindungsgemässen Akkupacks und
- Fig. 2: eine perspektivische Ansicht des Akkupacks aus Fig. 1 mit entferntem Gehäuse.

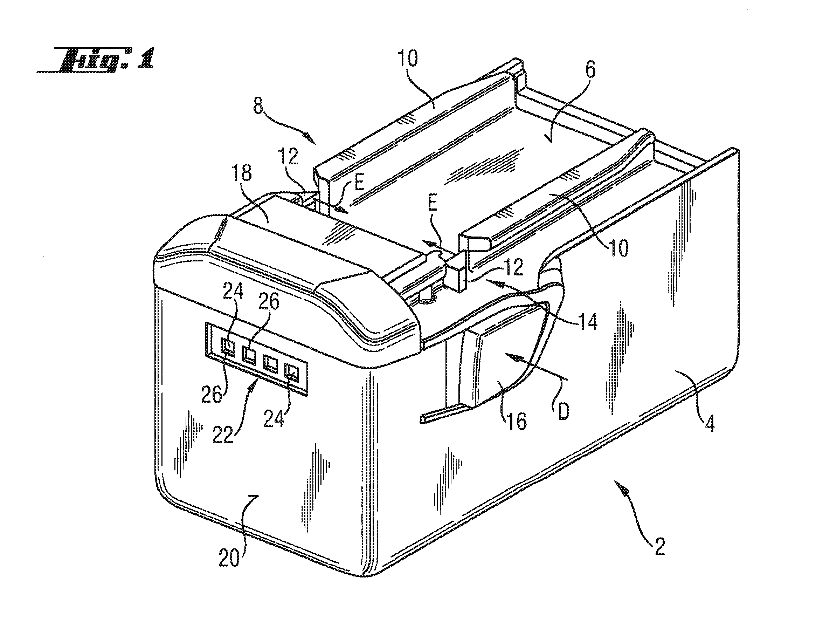

Fig. 1 zeigt einen Akkupack 2 eines nicht dargestellten Werkzeuggerätes, wie beispielsweise einem akkubetriebenen Schraub- oder Bohrgerät. Der Akkupack 2 weist ein Gehäuse 4 auf, an dessen Oberseite 6 Festlegemittel 8 ausgeformt sind, über die der Akkupack 2 an entsprechenden Gegenfestlegemitteln des Werkzeuggerätes gehalten werden kann. Die Festlegemittel 8 weisen zwei Eingriffschienen 10 auf, an deren einem Ende jeweils ein quer zur Längsrichtung der Eingriffschienen 10 bewegliches Verriegelungselement 12 vorgesehen ist.

Die beiden Verriegelungselemente 12 sind Teil einer insgesamt mit 14 bezeichneten Verriegelungsmechanik, über die der Akkupack 2 an dem Werkzeuggerät verriegelbar ist und die durch gleichzeitige Betätigung zweier als Druckknöpfe ausgebildeter Betätigungsmittel 16 in Druckrichtung D in eine Entriegelungsstellung verbringbar sind, wie durch die Pfeile E angedeutet ist.

Ferner weist der Akkupack 2 an der Oberseite 6 neben den Verriegelungselementen 12 ein Kupplungsmittel 18 zum Anschluss nicht dargestellter elektrischer Kontakte des Werkzeuggerätes auf. An einer Vorderseite 20 des Gehäuses 4 ist zudem eine Ladezustandsanzeige 22 vorgesehen, die vier Leuchtdioden 24 in nebeneinander angeordneten Gehäuseöffnungen 26 aufweist.

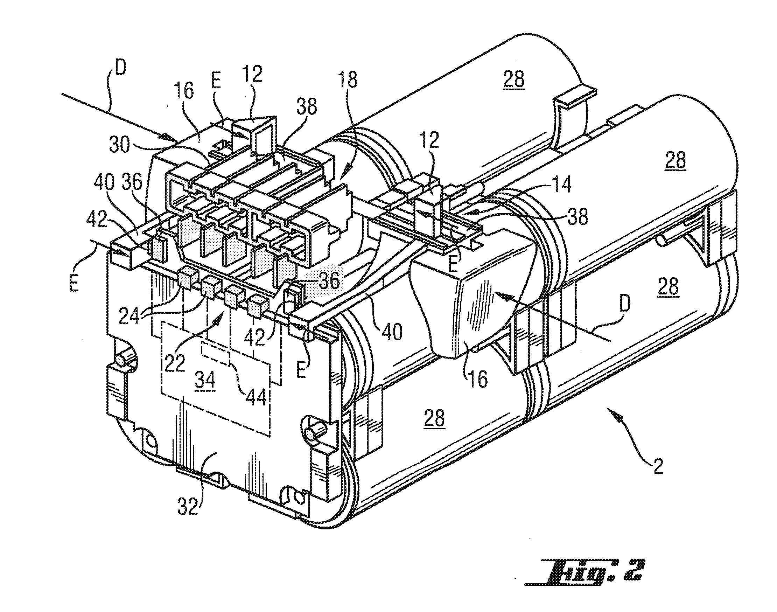

Wie aus Fig. 2 zu entnehmen ist, sind in dem Akkupack 2 mehrere Akkuzellen 28 untergebracht, die in nicht näher dargestellter Weise mit Kontakten 30 des Kupplungsmittels 18 elektrisch verbunden sind. Ferner ist eine Platine 32 vorgesehen, die eine schematisch dargestellte Messelektronik 34 zur Messung eines Ladezustandes der Akkuzellen 28 trägt. Die Messelektronik 34 ist mit den vier Leuchtdioden 24 verbunden. Zudem sind auf der Platine zwei Innenschaltmittel 36 in Form von Mikroschaltern gehalten, über die die Messelektronik 34 aktivierbar ist.

Wie aus Fig. 2 ferner zu entnehmen ist, sind die Betätigungsmittel 16 an gegenüberliegenden Seiten des Akkupacks 2 angeordnet und liegen jeweils an einem Schlitten 38 an, an dem jeweils eines der Verriegelungselemente 12 ausgeformt ist. Zudem ragt von jedem Schlitten 38 ein Druckglied 40 ab, das jeweils an einem Stössel 42 eines der Innenschaltmittel 36 anliegt. Auf diese Weise ist jedes der beiden Betätigungsmittel 16 über den jeweiligen Schlitten 38 und das Druckglied 40 mit einem der Innenschaltmittel 36 mechanisch gekoppelt.

Wenn nun eines der Betätigungsmittel 16 durch Druckbeaufschlagung in Druckrichtung D betätigt wird, verschiebt dieser den Schlitten 38 und mit diesem zusammen auch das betreffende Druckglied 40 entgegen der Kraft eines nicht dargestellten Federelementes in Richtung E. Hierdurch wird nun der Stössel 42 des Innenschaltmittels 36 betätigt, an dem das jeweilige Druckglied 40 anliegt. Das Innenschaltmittel 36 aktiviert daraufhin die Messelektronik 34, die nun den Ladezustand der Akkuzellen 28 misst und in Abhängigkeit des Messergebnisses entweder eine, zwei, drei oder alle vier Leuchtdioden 24 aktiviert.

Hierbei kann die Messelektronik 34 so ausgelegt sein, dass sie nur bei gleichzeitiger Betätigung beider Innenschaltmittel 36 oder aber auch durch Betätigung eines einzigen der Innenschaltmittel 36 aktiviert wird.

Da die Betätigungsmittel 16 jedoch gleichzeitig als von Aussen zugängliche Aussenschaltmittel zum Lösen der Verriegelungselemente 12 dienen, wird die Ladezustandsanzeige 22 aber in jedem Fall jedes Mal dann aktiviert, wenn die Verriegelungsmechanik 14 durch Betätigung beider Betätigungsmittel 16 gelöst wird, beispielsweise um den Akkupack 2 von einem Werkzeuggerät abzunehmen.

Sobald der Druck in Druckrichtung D wieder von den Betätigungsmitteln 16 genommen wird verschieben sich die Schlitten 38 durch die Kraft des nicht dargestellten Federelementes entgegen der Richtung E in die Ausgangsstellung. Gleichzeitig wird dabei auch der Druck der Druckglieder 40 von den Stösseln 42 der Innenschaltmittel 36 genommen und die Messelektronik 34 dadurch wieder deaktiviert.

Ferner ist in die Messelektronik 24 ein Timer 44, beispielsweise in Form eines integrierten Schaltkreises oder einer Softwarefunktion integriert, der die Ladezustandsanzeige 22 drei Sekunden nach Aktivierung durch die Innenschaltmittel 36 wieder deaktiviert.

## Patentansprüche

1. Akkupack (2) für ein Handwerkzeuggerät
mit einem Gehäuse (4), in dem mehrere Akkuzellen (28) untergebracht sind und an dem von Aussen zugängliche und mit den Akkuzellen (28) elektrisch verbundene Kupplungsmittel (18) vorgesehen sind,
und mit einer Ladezustandsanzeige (22), die über von Aussen zugängliche Aussenschaltmittel aktivierbar ist und den Ladezustand der Akkuzellen (28) angibt,
**dadurch gekennzeichnet, dass** die Aussenschaltmittel durch Betätigungsmittel (16) einer Verriegelungsmechanik (14) des Akkupacks (2) gebildet sind.

2. Akkupack nach Anspruch 1, **dadurch gekennzeichnet, dass** die Ladezustandsanzeige (22) mit einer Messelektronik (34) verbunden ist, die über im Innern des Gehäuses (4) angeordnete Innenschaltmittel (36) aktivierbar ist, die mit den Betätigungsmitteln (16) mechanisch gekoppelt sind.

3. Akkupack nach Anspruch 2, **dadurch gekennzeichnet, dass** die mechanische Koppelung über ein Druckglied (40) erfolgt, das mit einem Verriegelungselement (12) der Verriegelungsmechanik (14) fest verbunden ist.

4. Akkupack nach einem der Ansprüche 1 bis 3, **dadurch gekennzeichnet, dass** die Betätigungsmittel (16) zwei an gegenüberliegenden Seiten des Akkupacks (2) angeordnete Druckknöpfe umfassen, über die die Messelektronik (34) jeweils aktivierbar ist.

5. Akkupack nach Anspruch 4, **dadurch gekennzeichnet, dass** die Betätigungsmittel (16) zwei an gegenüberliegenden Seiten des Akkupacks (2) angeordnete Druckknöpfe umfassen, wobei die Messelektronik (34) nur durch gleichzeitigen Druck auf beide Druckknöpfe aktivierbar ist.

6. Akkupack nach einem der Ansprüche 1 bis 5, **dadurch gekennzeichnet, dass** die Messelektronik (34) einen Timer aufweist, über den die Ladezustandsanzeige (22) nach Ablauf einer vorbestimmten Zeitdauer ab Aktivierung wieder deaktivierbar ist.

7. Akkupack nach einem der Ansprüche 1 bis 6, **dadurch gekennzeichnet, dass** die Ladezustandsanzeige (22) mehrere Leuchtdioden (24) aufweist, die bei aktivierter Messelektronik (34) in Abhängigkeit vom gemessenen Ladezustand in unterschiedlicher Anzahl aktivierbar sind.

## Claims

1. Battery pack (2) for a hand-held power tool, comprising
a housing (4) in which a plurality of battery cells (28) are accommodated and on which are provided coupling means (18) which are accessible from the outside and are connected electrically to the battery cells (28),
and a charge state display (22) which can be activated via external switching means accessible from the outside and which indicates the charge state of the battery cells (28),
**characterised in that** the external switching means are formed by actuating means (16) of a locking mechanism (14) of the battery pack (2).

2. Battery pack according to Claim 1, **characterised in that** the charge state display (22) is connected to measurement electronics (34) which can be activated via internal switching means (36) arranged in the interior of the housing (4) and coupled mechanically to the actuating means (16).

3. Battery pack according to Claim 2, **characterised in that** the mechanical coupling is effected via a pressure member (40) which is firmly connected to the locking element (12) of the locking mechanism (14).

4. Battery pack according to any one of Claims 1 to 3, **characterised in that** the actuating means (16) include two push buttons arranged on opposite sides of the battery pack (2), by means of each of which the measurement electronics (34) can be activated.

5. Battery pack according to Claim 4, **characterised in that** the actuating means (16) include two push buttons arranged on opposite sides of the battery pack (2), the measurement electronics (34) being activatable only by simultaneous pressing of both push buttons.

6. Battery pack according to any one of Claims 1 to 5, **characterised in that** the measurement electronics (34) include a timer via which the charge state display (22) can be deactivated again upon expiry of a predetermined time period from the time of activation.

7. Battery pack according to any one of Claims 1 to 6, **characterised in that** the charge state display (22) has a plurality of light-emitting diodes (24) which, with the measurement electronics (34) activated, can be activated in different numbers depending on the charge state measured.

## Revendications

1. Bloc-batterie (2) pour un outillage portatif
avec un boîtier (4), dans lequel sont logées plusieurs cellules de batterie (28) et sur lequel sont disposés des moyens de couplage (18) accessibles de l'extérieur et reliés électriquement aux cellules de batterie (28),
et avec un affichage d'état de charge (22) qui peut être activé par le biais de moyens de commande externes accessibles de l'extérieur et qui indique l'état de charge des cellules de batterie (28),
**caractérisé en ce que** les moyens de commande externes sont formés par des moyens d'actionnement (16) d'un dispositif mécanique de verrouillage (14) du bloc-batterie (2).

2. Bloc-batterie selon la revendication 1, **caractérisé en ce que** l'affichage d'état de charge (22) est relié à une unité électronique de mesure (34) qui peut être activée par des moyens de commande internes (36) qui sont disposés à l'intérieur du boîtier (4) et qui sont couplés mécaniquement aux moyens d'actionnement (16).

3. Bloc-batterie selon la revendication 2, **caractérisé en ce que** le couplage mécanique est effectué par le biais d'un membre presseur (40) qui est relié solidairement à un élément de verrouillage (12) du dispositif mécanique de verrouillage (14).

4. Bloc-batterie selon l'une quelconque des revendications 1 à 3, **caractérisé en ce que** les moyens d'actionnement (16) comprennent deux boutons-poussoirs qui sont disposés sur des côtés opposés du bloc-batterie (2) et permettent chacun d'activer l'unité électronique de mesure (34).

5. Bloc-batterie selon la revendication 4, **caractérisé en ce que** les moyens d'actionnement (16) comprennent deux boutons-poussoirs disposés sur des côtés opposés du bloc-batterie (2), l'unité électronique de mesure (34) pouvant être activée uniquement par une pression simultanée sur les deux boutons-poussoirs.

6. Bloc-batterie selon l'une quelconque des revendications 1 à 5, **caractérisé en ce que** l'unité électronique de mesure (34) comprend une minuterie par le biais de laquelle l'affichage d'état de charge (22) peut être de nouveau désactivé à partir de l'activation après l'expiration d'une durée prédéfinie.

7. Bloc-batterie selon l'une quelconque des revendications 1 à 6, **caractérisé en ce que** l'affichage d'état de charge (22) comporte plusieurs diodes électroluminescentes (24) dont un nombre différent, lorsque l'unité électronique de mesure (34) est activée, peut être activé selon l'état de charge mesuré.
